# EUROPEAN PATENT APPLICATION

(11) **EP 3 932 264 A1**
(43) Date of publication of application: **05.01.2022**
(21) Application number: 19917392.3
(22) Date of filing: 13.03.2019
(51) Int. Cl.: A47G 27/02, D05C 17/02, B05D 3/04, B05C 9/14

(54) **MANUFACTURING METHOD FOR CONTINUOUS CARPET CUSHION**

(30) Priority: 28.02.2019 CN 201910151325
(71) Applicant: Formosa Saint Jose Corp., Taipei, Taiwan 106 (TW)
(72) Inventor: YANG, Mingshun, Taipei, Taiwan 106 (CN)
(74) Representative: Jungblut & Seuss
(86) International application number: PCT/CN2019/077970
(87) International publication number: WO 2020/172916

(57) **Abstract**

A manufacturing method for a continuous carpet cushion, comprising the following steps: providing a carpet; performing buffering; performing gluing; performing drying; and performing stamping and cutting. By means of the implementation of this method, production steps of different speeds can be combined so that the production line achieves continuous production without downtime and the consistency of the production process; the maintenance and operation are easy; the production steps of different speeds can be coordinated; if any production step requires a brief shutdown or the brief execution of troubleshooting, other production lines can still continue the production without a shutdown at all; intermediate products in production do not need to be placed on the ground, produced in sections, or removed from the production line. This method can ensure the uninterruptibility of the production line, more effectively save labor and reduce manufacturing hours, machine cost, material cost and overall manufacturing cost, greatly improve the manufacturing efficiency, and increase the production capacity and industrial competitiveness.

## Description

### TECHNICAL FIELD

The present invention relates to a production method of a carpet mat, and more particularly, to a production method of continuous carpet mat.

### BACKGROUND OF THE INVENTION

The production steps of producing carpet mat in existing production methods are each performed in separated places or in separated time periods majorly due to different production speeds. Products generated from each of the process steps are stored separately and then carried by manpower or machines to the next production step. Enormous storage and maneuvering space, manpower and laboring hours are all required in such production methods. In between the process steps of existing production methods, carpets with a length of 20 to 30 meters have to be sewed together end to end for production, the sewing portion is a great loss when the carpet is expensive. What is more, end portion of each carpet after cutting for different required sizes of carpet mat cannot be used in other productions and generate another major waste of the expensive carpet.

Accordingly, it is imperative to provide a production method of continuous carpet mat which not only is capable of being effectively coupling every process steps of different production speeds, but also able to keep the whole production line working even when any process step of the line fails or needs to be stopped for examination or repairing, and most importantly, with the merit of saving production time, saving laboring hours, saving material costs and thus greatly promote the production efficiency, and thus meets industry progress and creative expectations in terms of lowest costs with high efficiency.

### SUMMARY OF THE INVENTION

The purpose of the present invention is to provide a production method of continuous carpet mat to effectively reduce the manpower, production time, machinery cost, material cost, and thus overall production cost, and eventually production efficiency, productivity and the competitiveness of the industry is greatly improved.

The purpose of the present invention is to disclose a production method of continuous carpet mat, it includes the following process steps: providing carpet, buffering, commence gluing, drying, and commence pressing and cutting. With the implementation of the present invention, less than half of the manpower as in traditional production lines is required; process steps of different production speeds in production lines can be coordinated and combined to make whole production line easy to be maintained; and non-stop producing even when any process step stopped for maintenance or malfunctioning; with at least one buffer to combine process steps of different production speed, the production line works all time without having to be stopped, intermediate products can be continuously produced and guided without having to be put on ground or transported between each process stops, the production efficiency and capacity are thus greatly improved; manpower, production time, machinery cost, material cost and the whole production cost can thus be greatly reduced.

The purpose of the present invention is to provide a production method of continuous carpet mat, comprising the following process steps: providing carpet, wherein the carpet is being input from a carpet producing mechanism; commencing buffering, wherein the carpet is being guided into a first buffer; commencing gluing, wherein the carpet is being output from the first buffer and being guided into a gluing machine wherein a glue is being bonded on one surface of the carpet to become a glued carpet; commencing drying, wherein the glued carpet is being guided into an oven and being dried to form a continuous carpet mat; and commencing stamping, wherein the continuous carpet mat is being guided into an automatic cutter and wherefrom multiple carpet mats are being output.

In an embodiment, the carpet producing mechanism is a tufting machine or a needle punch machine, wherein the carpet is a tufted carpet or a needle punched carpet.

In an embodiment, the carpet producing mechanism being a tufting machine and wherein yarns being provided by a yarn creel are being guided into the tufting machine, wherein the yarns are synthetic fiber yarns or cotton yarns.

In an embodiment, the glue is being evenly bonded on one surface of the carpet by coating.

In an embodiment, the shape or size of the said carpet mats are predefined in the automatic cutter.

In an embodiment, a commencing second stage buffering process step, which being provided in between the process steps of commencing drying and commencing stamping is further included, the continuous carpet mat is being guided into a second stage buffer and then being output from the second stage buffer and being guided into the automatic cutter.

In an embodiment, the process step as in the previous embodiment further includes a commencing combining process step, which being provided in between the process steps of commencing second stage buffering and commencing stamping, wherein the continuous carpet mat output from the second stage buffer is being guided into a laminating machine to combine a bottom pad with the surface of the glue and then being guided into the automatic cutter.

In an embodiment, the process step as in the previous embodiment further includes a commencing third stage buffering process step, which being provided in between the process steps of commencing combining and commencing stamping, wherein the continuous carpet mat with bottom pad output from the laminating machine is being guided into a third stage buffer and then being output from the third stage buffer and being guided into the automatic cutter.

In an embodiment, the first buffer or the second buffer or the third buffer is being a storage rack.

In an embodiment, the carpet is input into and output from the first buffer in a first-in-first-out method, the continuous carpet mat is input into and output from the second buffer in a first-in-first-out method, and the continuous carpet mat with bottom pad is input into and output from the third buffer in a first-in-first-out method.

In an embodiment, a transporting and chopping scrap process step is further included, which being provided after the process step of commencing stamping, wherefrom multiple carpet mats and chopped scraps are being output.

Implementation of the present invention at least involves the following inventive steps:
1. Implementing a buffer or buffers to couple process steps of different production speeds, making whole production line work all time without having to be stopped. Intermediate products can be continuously generated and guided without having to be put on ground or transported between places. The production efficiency and the production capacity are thus greatly improved.
2. Process steps of different production speeds are well coupled, production goes on even malfunctioning happens or examinations required in any process step to ensure full usage without waste of the carpet, which is the most expensive material in the production.
3. Seamless production with only half of the manpower is required for effective operation and for maintenance; moreover, only one group of worker manpower is required to be in the aisle to watch over 2 such production lines implemented side by side each on a side of the aisle.
4. Non-stop production saving material cost, labor cost, machine cost and thus whole production cost to greatly promote the competitiveness of the industry.
5. Only one sewing loss is generated for each 1500 to 2000 meters of tufted carpet, and no sewing loss in needle punch carpet where the cotton material is continuously provided.

The features and advantages of the present invention are detailed hereinafter with reference to the preferred embodiments. The detailed description is intended to enable a person skilled in the art to gain insight into the technical contents disclosed herein and implement the present invention accordingly. In particular, a person skilled in the art can easily understand the objects and advantages of the present invention by referring to the disclosure of the specification, the claims, and the accompanying drawings.

### BRIEF DESCRIPTION OF THE DRAWINGS

Fig. 1 is a process step diagram of a production method of continuous carpet mat according to an embodiment of the present invention.
Fig. 2A is a schematic view of a production line of continuous carpet mat according to an embodiment of the present invention.
Fig. 2B is a schematic view of a production line of continuous carpet mat according to another embodiment of the present invention.
Fig. 3A is a process step diagram of a production method of continuous carpet mat further includes a commencing second stage buffering process step according to an embodiment of the present invention.
Fig. 3B is a schematic view of a production line of continuous carpet mat according to another embodiment of the present invention.
Fig. 4A is a process step diagram of a production method of continuous carpet mat further includes a commencing second stage buffering process step and a commencing combining process step according to an embodiment of the present invention.
Fig. 4B is a schematic view of a production line of continuous carpet mat according to another embodiment of the present invention.
Fig. 5A is a process step diagram of a production method of continuous carpet mat further includes a commencing second stage buffering process step and a commencing combining process step and a commencing third stage buffering process step according to an embodiment of the present invention.
Fig. 5B is a schematic view of a production line of continuous carpet mat according to another embodiment of the present invention.
Fig. 6 is a process step diagram of the production method of continuous carpet mat according to Fig. 1 of the present invention further includes a transporting and chopping scrap process step.
Fig. 7 is a process step diagram of the production method of continuous carpet mat according to Fig. 3A of the present invention further includes a transporting and chopping scrap process step.
Fig. 8 is a process step diagram of the production method of continuous carpet mat according to Fig. 4A of the present invention further includes a transporting and chopping scrap process step.
Fig. 9 is a process step diagram of the production method of continuous carpet mat according to Fig. 5A of the present invention further includes a transporting and chopping scrap process step.

### [Symbol Description]

- S100: production method of continuous carpet mat
- S10: providing carpet
- S20: commencing buffering
- S30: commencing gluing
- S40: commencing drying
- S45: commencing second stage buffering
- S47: commencing combining
- S48: commencing third stage buffering
- S50: commencing stamping
- S60: transporting and chopping scrap
- 10: yarn creel
- 11: yarns
- 20: carpet producing mechanism
- 21: carpet
- 30: first buffer
- 40: gluing machine
- 41: glued carpet
- 50: oven
- 51: continuous carpet mat
- 60: automatic cutter
- 61: carpet mat
- 70: second stage buffer
- 80: laminating machine
- 90: third stage buffer

### DETAILED DESCRIPTION OF THE EMBODIMENTS OF THE INVENTION

Embodiments together with illustrating graphs reference are provided hereafter for further understanding and recognizing of the realization of the present invention. The descriptions and the embodiments help to more clearly demonstrate the claimed invention as examples. However, implementation of the claimed invention is also realizable when performed without referencing certain details of the examples.

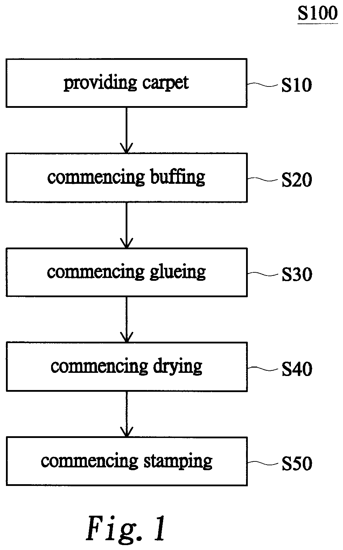

Please refer to Fig. 1, in an embodiment of the present invention, a production method of continuous carpet mat S100, comprises the following steps: providing carpet (step S10), commencing buffering (step S20), commencing gluing (step S30), commencing drying (step S40), and commencing stamping (step S50).

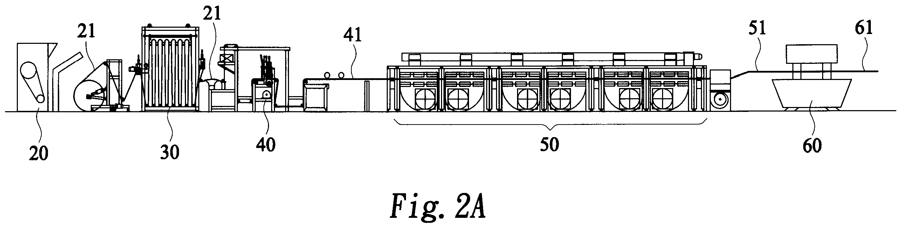

As shown in Fig. 1 and Fig. 2A, providing carpet (step S10), wherein a carpet 21 is being produced and output from a carpet producing mechanism 20. The carpet producing mechanism 20 can be a tufting machine or a needle punch machine, wherein the carpet 21 produced by the tufting machine is a tufted carpet, and the carpet 21 produced by the needle punch machine is a needle punched carpet.

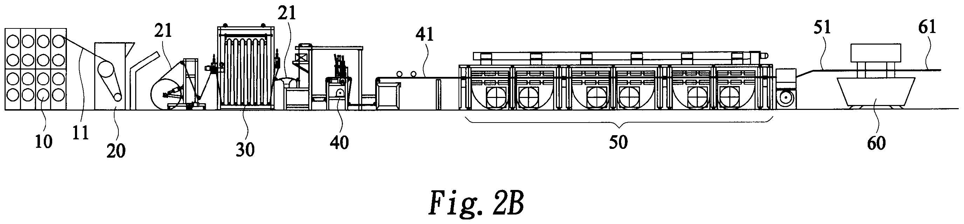

Please refer to Fig. 2B, while the carpet producing mechanism 20 being a tufting machine, yarns 11 provided by a yarn creel 10 are being guided into the tufting machine, wherein the yarns 11 can be made of one kind of material or more than one kind of materials, mostly used yarns 11 are synthetic fiber yarns 11 or cotton yarns 11 (includes synthetic cotton yarns).

Wherein when the carpet producing mechanism 20 is a needle punch machine, cottons are needle punched to be more fluffy to increase the elasticity and softness of the carpet 21, wherein the thickness of same amount of cotton after needle punching can be increased to 2 times or more.

The production frequency or speed of the carpet producing mechanism 20 is majorly depending on the thickness or weight of the carpet 21 or the length and distance between fibers of the carpet 21 (density of the fibers). The production frequency or production speed of the carpet producing mechanism 20 is lower when the length is longer or the density of the fibers is higher.

Please refer to Fig. 1, Fig. 2A and Fig. 2B, commencing buffering (step S20), wherein the carpet 21 produced by the carpet producing mechanism 20 is being guided into a first buffer 30 for buffering. The said first buffer 30 can be a storage rack.

The storage capacity of the first buffer 30 for the carpet 21 is majorly decided by the requirement of different applications, for example, it can be 35 meters, 20 meters or 15 meters in one application, or it can be 100 meters, 50 meters or just 10 meters in another application.

As for the method of the guiding of the carpet 21 in or out the first buffer 30 can be in a first-in-first-out method, that is to say, the one end of the carpet 21 first guided into the first buffer 30 is the very end first guided out the first buffer 30.

Please refer to Fig. 1 to Fig. 2B, commencing gluing (step S30), wherein the carpet 21 is being guided out from the first buffer 30 and being guided into a gluing machine 40, wherein a glue is being bonded on one surface of the carpet 21 to make a glued carpet 41.

As for the method of bonding the glue on one surface of the carpet 21 can be performed by coating or spraying the glue evenly on one surface of the carpet 21, wherein the glue can be an adhesive glue.

Please refer again to Fig. 1 to Fig. 2B, commencing drying (step S40), is to guide the glued carpet 41 into an oven 50 and dry the glued carpet 41 to form a continuous carpet mat 51 guided out the oven 50.

Wherein, before cutting or processed, one side of the continuous carpet mat 51 formed is dried glue, and the other side is carpet 21.

The production speed of the process step commencing drying (step S40), that is to say the speed of the oven 50, depends on the material characteristics of the glued carpet 41 and must be a specific defined speed with no stop, otherwise the glued carpet 41 will be damaged and an enormous material loss will be generated.

The importance of the process step commencing buffering (step S20) is now obvious and clear: the process step commencing drying (step S40) must be continuous in a specific speed and cannot be stopped, while the production speed of the carpet producing mechanism 20 varies from the thickness or weight of the carpet 21 and cannot be a constant speed, making the speed of the process step providing carpet (step S10) and the speed of the process step commencing gluing (step S30) different from the speed of the process step commencing drying (step S40), and generating inconsistency of production speed in whole production line between processes which can only be coordinated and eliminated by the process step commencing buffering (step S20) of the present invention. With the implementation of the process step commencing buffering (step S20), processes steps commencing drying (step S40) and providing carpet (step S10) with different process speeds are balanced and can be organized in the same production line. Even when any of the process steps is stopped, there is still enough material to keep other process steps, the oven 50 and thus the production line running.

As also can be seen in Fig. 1 to Fig. 2B, commencing stamping (step S50), is to guide the continuous carpet mat 51 output from the oven 50 into an automatic cutter 60 and multiple carpet mats 61 are being output from the automatic cutter 60.

Wherein the shape or size of the said carpet mats 61 are predefined by application requirement in the automatic cutter 60.

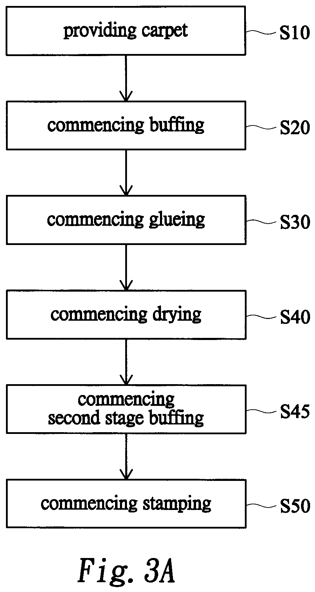

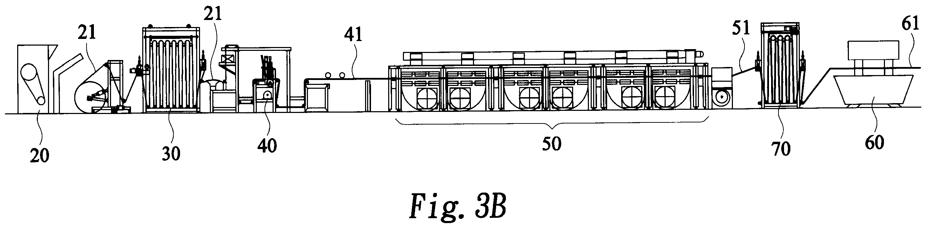

Please refer now to Fig. 3A and Fig. 3B, the production method of continuous carpet mat S100 can further includes a commencing second stage buffering (step S45) process step, which being provided in between the process steps of commencing drying (step S40) and commencing stamping (step S50), the continuous carpet mat 51 output from the oven 50 is guided into a second stage buffer 70 and then being output from the second stage buffer 70 and being guided into the automatic cutter 60.

The said second stage buffer 70 can also be a storage rack. The storage capacity of the second stage buffer 70 for the continuous carpet mat 51 is also decided by the requirement of different applications. The method of the guiding of the continuous carpet mat 51 in or out the second stage buffer 70 can also be in a first-in-first-out method.

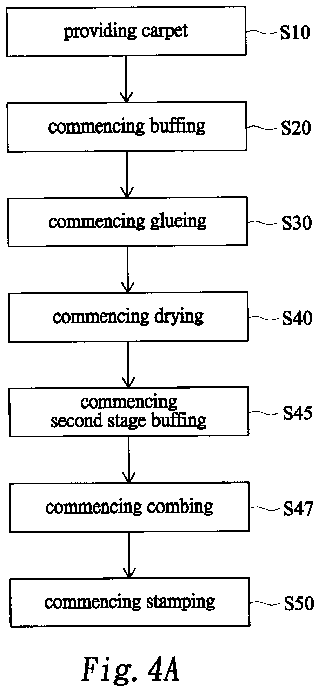

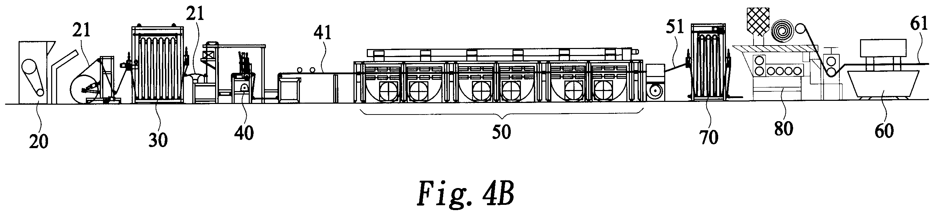

And as shown in Fig. 4A and Fig. 4B, the production method of continuous carpet mat as shown in Fig. 3A and Fig. 3B can further includes a commencing combining (step S47) process step provided in between the process steps of commencing second stage buffering (step S45) and commencing stamping (step S50).

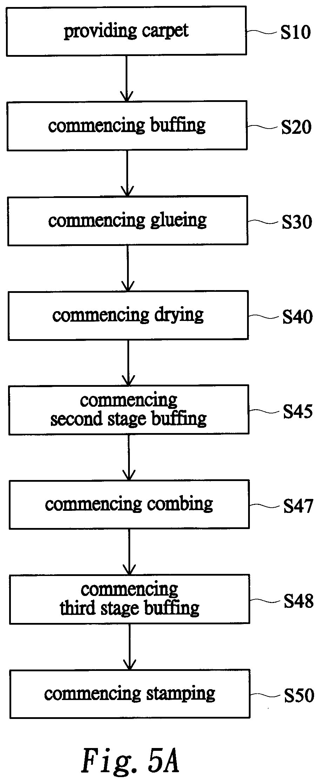

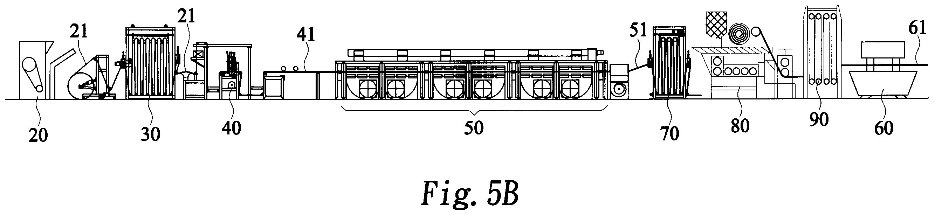

The process step commencing combining (step S47) is to guide the continuous carpet mat 51 output from the second stage buffer 70 into a laminating machine 80 to combine a bottom pad with the surface of the glue and then guided into the automatic cutter 60. Then as shown in Fig. 5A and Fig. 5B, the production method of continuous carpet mat as shown in Fig. 4A and Fig. 4B can further includes a commencing third stage buffering (step S48) process step provided in between the process steps of commencing combining (step S47) and commencing stamping (step S50).

The process step commencing third stage buffering (step S48) is to guide the continuous carpet mat 51 with the bottom pad output from the laminating machine 80 into a third stage buffer 90 and then into the automatic cutter 60.

The said third stage buffer 90 can also be a storage rack. The storage capacity of the third stage buffer 90 for the continuous carpet mat 51 with the bottom pad is also decided by the requirement of different applications. The method of the guiding of the continuous carpet mat 51 with the bottom pad in or out the third stage buffer 90 can also be in a first-in-first-out method.

And thus, with the implementation of the first buffer 30 together with the second stage buffer 70, or the implementation of the first buffer 30 together with the second stage buffer 70 and the third stage buffer 90, The production speed of each and every of the process steps in the production line can be well organized and balanced with more flexibility.

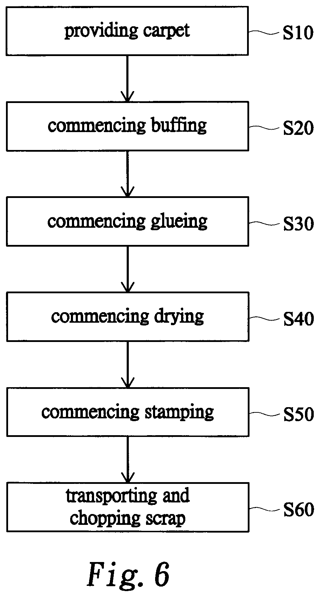

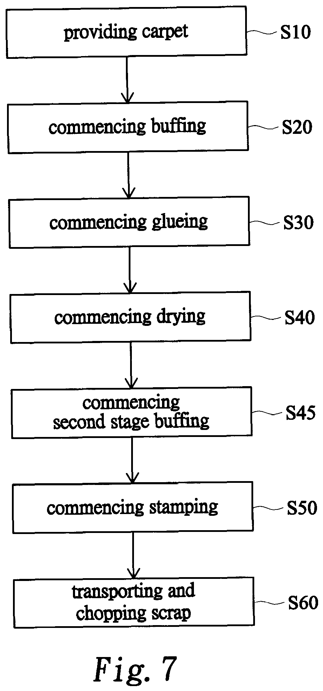

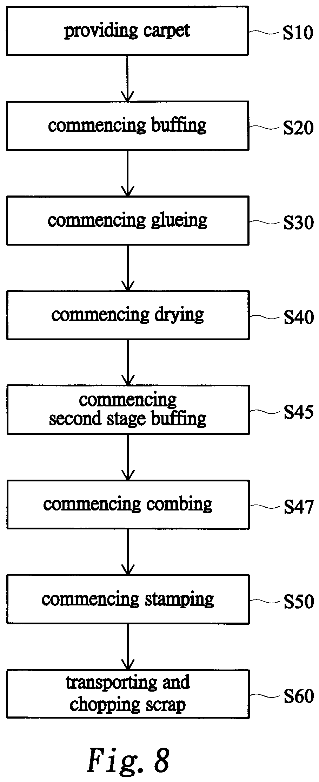

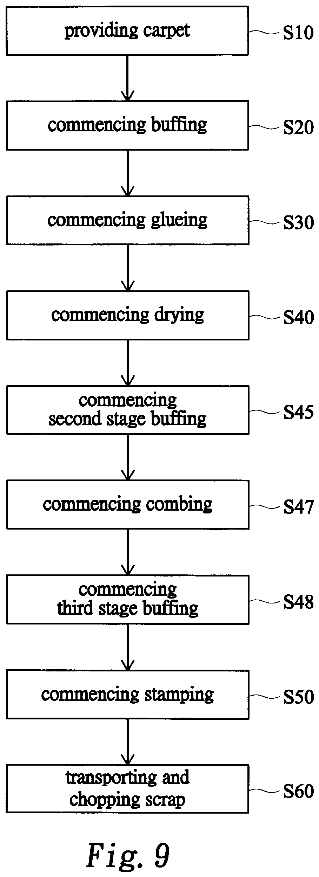

Moreover, as shown in Fig. 6 to Fig. 9, after the process step of commencing stamping (step S50) in each of the previous embodiments, a process step transporting and chopping scrap (step S60) can further be implemented, the process step transporting and chopping scrap (step S60) transports multiple carpet mats 61 and cut the unnecessary scraps from production and output the scraps.

In conclusion, as indicated by the description of the aforesaid embodiments, with the implementation of the process step commencing buffering (step S20), or with the process step commencing second stage buffering (step S45), or further with the process step commencing third stage buffering (step S48), that is to say, the implementation of the first buffer 30, or the implementation of the first buffer 30 with the second stage buffer 70, or the implementation of the first buffer 30 with the second stage buffer 70 together with the third stage buffer 90, production lines feature non-stop productions; process steps of different production speeds are well coupled; seamless production with only half of the manpower required; and saving material cost, labor cost, machine cost and thus whole production cost to greatly promote the competitiveness of the industry. The embodiments described above are intended only to demonstrate the technical concept and features of the present invention to enable a person skilled in the art to understand and implement the contents disclosed herein. It is understood that the disclosed embodiments are not to limit the scope of the present invention. Therefore, all equivalent changes or modifications based on the concept of the present invention should be encompassed by the appended claims.

## Claims

1. A production method of continuous carpet mat, comprising the following process steps:
providing carpet, wherein the carpet is being input from a carpet producing mechanism;
commencing buffering, wherein the carpet is being guided into a first buffer;
commencing gluing, wherein the carpet is being output from the first buffer and being guided into a gluing machine wherein a glue is being bonded on one surface of the carpet to become a glued carpet;
commencing drying, wherein the glued carpet is being guided into an oven and being dried to form a continuous carpet mat; and
commencing stamping, wherein the continuous carpet mat is being guided into an automatic cutter and wherefrom multiple carpet mats are being output.

2. The production method of claim 1, wherein the carpet producing mechanism is a tufting machine or a needle punch machine, wherein the carpet is a tufted carpet or a needle punched carpet.

3. The production method of claim 2, wherein the carpet producing mechanism being a tufting machine and wherein yarns being provided by a yarn creel are being guided into the tufting machine, wherein the yarns are synthetic fiber yarns or cotton yarns.

4. The production method of claim 1, wherein the glue is being evenly bonded on one surface of the carpet by coating.

5. The production method of claim 1, wherein the shape or size of the said carpet mats are predefined in the automatic cutter.

6. The production method of claim 1, further includes a commencing second stage buffering process step, which being provided in between the process steps of commencing drying and commencing stamping, the continuous carpet mat is being guided into a second stage buffer and then being output from the second stage buffer and being guided into the automatic cutter.

7. The production method of claim 6, further includes a commencing combining process step, which being provided in between the process steps of commencing second stage buffering and commencing stamping, wherein the continuous carpet mat output from the second stage buffer is being guided into a laminating machine to combine a bottom pad with the surface of the glue and then being guided into the automatic cutter.

8. The production method of claim 7, further includes a commencing third stage buffering process step, which being provided in between the process steps of commencing combining and commencing stamping, wherein the continuous carpet mat with bottom pad output from the laminating machine is being guided into a third stage buffer and then being output from the third stage buffer and being guided into the automatic cutter.

9. The production method of claim 1 or claim 6 or claim 7 or claim 8, wherein the first buffer or the second buffer or the third buffer is being a storage rack.

10. The production method of claim 1 or claim 6 or claim 7 or claim 8, wherein the carpet is being input into and output from the first buffer in a first-in-first-out method, the continuous carpet mat is being input into and output from the second buffer in a first-in-first-out method, and the continuous carpet mat with bottom pad is being input into and output from the third buffer in a first-in-first-out method.

11. The production method of claim 1 or claim 6 or claim 7 or claim 8, further includes a transporting and chopping scrap process step, which being provided after the process step of commencing stamping, wherefrom multiple carpet mats and chopped scraps are being output.
